# EUROPÄISCHE PATENTSCHRIFT

(11) **EP 4 338 024 B1**
(45) Veröffentlichungstag und Bekanntmachung des Hinweises auf die Patenterteilung: **11.02.2026**
(21) Anmeldenummer: 22758512.2
(22) Anmeldetag: 01.08.2022
(51) Int. Cl.: G05B 23/02, G05B 17/02, G06N 20/00, G06N 3/08, B05B 17/04

(54) **BETRIEBSVERFAHREN FÜR EINE BESCHICHTUNGSANLAGE UND BESCHICHTUNGSANLAGE ZUR AUSFÜHRUNG DES BETRIEBSVERFAHRENS**
OPERATING METHOD FOR A COATING SYSTEM AND COATING SYSTEM FOR CARRYING OUT THE OPERATING METHOD
PROCÉDÉ DE FONCTIONNEMENT D'UN SYSTÈME DE REVÊTEMENT ET SYSTÈME DE REVÊTEMENT POUR METTRE EN OEUVRE LE PROCÉDÉ DE FONCTIONNEMENT

(30) Priorität: 17.08.2021 DE 102021121320
(43) Veröffentlichungstag der Anmeldung: 20.03.2024
(73) Patentinhaber: Dürr Systems AG, 74321 Bietigheim-Bissingen (DE)
(72) Erfinder: KOCH, Nico, 71732 Tamm (DE); THOMÄ, Paul, 74343 Sachsenheim (DE); VINCENZ, Dominik, 74343 Sachsenheim (DE); HEIM, Robin, 74363 Güglingen (DE)
(74) Vertreter: v. Bezold & Partner Patentanwälte - PartG mbB
(86) Internationale Anmeldenummer: PCT/EP2022/071520
(87) Internationale Veröffentlichungsnummer: WO 2023/020821

(56) Entgegenhaltungen:
- WO-A1-2016/172316
- WO-A1-2020/224717
- CN-A- 112 246 469

## Beschreibung

### Technisches Gebiet der Erfindung

Die Erfindung betrifft ein Betriebsverfahren für eine Beschichtungsanlage zur Beschichtung von Bauteilen (z.B. Kraftfahrzeugkarosseriebauteile) mit einem Beschichtungsmittel (z.B. Lack) mittels eines Applikators (z.B. Rotationszerstäuber).

### Hintergrund der Erfindung

In modernen Lackieranlagen zur Lackierung von Kraftfahrzeugkarosseriebauteilen erfolgt eine Qualitätskontrolle des Lackierprozesses, um sicherzustellen, dass das Lackierergebnis bestimmten Standards genügt. Beispielsweise werden hierbei Qualitätseigenschaften des aufgebrachten Lacks gemessen, wie beispielsweise Schichtdicke, Ebenheit, Farbton, Helligkeit, Härte, Vernetzungsgrad und Glanzgrad, um nur einige Beispiele zu nennen. Auf diese Weise können dann Qualitätsdefekte auf den Lack der Kraftfahrzeugkarosserie ermittelt werden. In Abhängigkeit von diesen Messungen der Qualitätseigenschaften können dann Prozesswerte (z.B. Hochspannung einer elektrostatischen Lackaufladung, Lackstrom, Lenkluftstrom, etc.) der Lackieranlage angepasst werden, um die Qualität des Lackierprozesses zu verbessern. Diese Anpassung der Prozesswerte des Lackierprozesses zur Verbesserung der Qualität des Lackierprozesses erfolgt bisher manuell durch einen Experten aufgrund des Erfahrungswissens des Experten. Die Ursachen möglicher Qualitätsmängel werden hierbei ebenfalls manuell ermittelt, indem entsprechend dem Try-and-Error-Prinzip Prozesswerte verändert werden, wobei jeweils der Einfluss der Änderung auf die Qualität des Lackierprozesses bewertet wird. Diese Art der Qualitätskontrolle ist fehleranfällig und stark abhängig von der Erfahrung des damit betrauten Experten.

Aus WO 2020/141372 A1, CN 112 246 469 A, EP 2 095 336 B1 und DE 197 56 467 A1 sind Beschichtungsanlagen bekannt, bei denen Prozesswerte ermittelt werden. Durch eine Auswertung der prozesswerte können dann Fehlerzustände erkannt werden. Dies ist jedoch noch nicht vollständig befriedigend.

Schließlich ist zum allgemeinen technischen Hintergrund der Erfindung hinzuweisen auf WO 2020/224717 A1 und WO 2016/172316 A1.

### Beschreibung der Erfindung

Der Erfindung liegt deshalb die Aufgabe zugrunde, die Qualitätskontrolle in einer Beschichtungsanlage (z.B. Lackieranlage) zur Beschichtung von Bauteilen (z.B. Kraftfahrzeugkarosseriebauteile) zu verbessern.

Die vorstehend genannte Aufgabe wird durch ein Betriebsverfahren nach Anspruch 1 bzw. eine Beschichtungsanlage nach Anspruch 12 gelöst.

Das erfindungsgemäße Betriebsverfahren eignet sich allgemein für eine Beschichtungsanlage zur Beschichtung von Bauteilen mit einem Beschichtungsmittel mittels eines Applikators.

In einem bevorzugten Ausführungsbeispiel der Erfindung handelt es sich bei der Beschichtungsanlage jedoch um eine Lackieranlage zur Lackierung von Kraftfahrzeugkarosseriebauteilen mit einem Lack, wobei als Applikationsgerät ein Zerstäuber (z.B. Rotationszerstäuber) zum Einsatz kommen kann.

Die Erfindung ist jedoch hinsichtlich des applizierten Beschichtungsmittels nicht auf Lacke beschränkt. Vielmehr kann es sich bei dem applizierten Beschichtungsmittel auch um einen Klebstoff, ein Dichtmittel oder einen Dämmstoff handeln, um nur einige Beispiele zu nennen.

Darüber hinaus ist die Erfindung auch hinsichtlich des Typs des Applikators nicht auf einen Zerstäuber beschränkt. Vielmehr kann im Rahmen der Erfindung auch ein anderer Applikator eingesetzt werden, wie beispielsweise ein Druckkopf oder ein sogenannter Sealing-Applikator.

Ferner ist die Erfindung auch hinsichtlich der zu beschichtenden Bauteile nicht auf Kraftfahrzeugkarosseriebauteile beschränkt, die in dem bevorzugten Ausführungsbeispiel der Erfindung lackiert werden. Vielmehr eignet sich das erfindungsgemäße Betriebsverfahren allgemein zur Beschichtung von Bauteilen unterschiedlicher Typen.

Im Rahmen des erfindungsgemäßen Betriebsverfahrens werden in Übereinstimmung mit dem Stand der Technik Bauteile (z.B. Kraftfahrzeugkarosseriebauteile) mit einem Beschichtungsmittel (z.B. Lack) beschichtet. Bei dieser Beschichtung fallen bauteilbezogene Prozesswerte (z.B. Lackstrom, Lenkluftstrom, Aufladespannung einer elektrostatischen Lackaufladung, etc.) an, die Betriebsgrößen von Geräten der Beschichtungsanlage bei der Beschichtung der einzelnen Bauteile wiedergeben. Neben den vorstehend beispielhaft erwähnten Prozesswerten können hierbei vielfältige Prozesswerte anfallen und ausgewertet werden, wie später noch detailliert beschrieben wird.

Bei der Beschichtung der einzelnen Bauteile ergibt sich jeweils eine bauteilbezogene Beschichtungsqualität, d.h. die einzelnen Bauteile werden mit einer individuellen Beschichtungsqualität beschichtet.

Die Erfindung sieht hierbei vor, dass die bauteilbezogenen Prozesswerte der Beschichtungsanlage zumindest teilweise ermittelt werden. Dies bedeutet, dass beispielsweise bei der Lackierung einer Kraftfahrzeugkarosserie die Prozesswerte ermittelt werden, mit denen diese Kraftfahrzeugkarosserie lackiert wird. Dies ermöglicht dann eine Qualitätskontrolle, wie noch detailliert beschrieben wird.

Darüber hinaus sieht die Erfindung vorzugsweise vor, dass dann für die einzelnen beschichteten Bauteile jeweils bauteilbezogene Qualitätswerte ermittelt werden, die die Beschichtungsqualität der einzelnen Bauteile wiedergeben. Für jedes beschichtete Bauteil wird also zumindest ein Qualitätswert oder vorzugsweise ein Satz von Qualitätswerten ermittelt.

Die Erfindung sieht nun zusätzlich vor, dass qualitätsrelevante Auffälligkeiten der Prozesswerte ermittelt werden, um Beschichtungsfehler bei der Beschichtung der einzelnen Bauteile im Rahmen eines Vorhersagebetriebs bei der Beschichtung der Bauteile erkennen zu können. Die Ermittlung von Beschichtungsfehlern soll also im Rahmen der Erfindung nicht nur durch die Auswertung der gemessenen Qualitätswerte erfolgen, d.h. im Nachhinein, sondern vorab durch eine Ermittlung von qualitätsrelevanten Auffälligkeiten der Prozesswerte. Die Ermittlung der qualitätsrelevanten Auffälligkeiten der Prozesswerte im Rahmen des Vorhersagebetriebs erfolgt mittels eines Maschinelles-Lernen-Algorithmus, d.h. mittels künstlicher Intelligenz (Kl).

Darüber hinaus sieht die Erfindung vor, dass die Position der den qualitätsrelevanten Auffälligkeiten entsprechenden Beschichtungsfehler auf der Bauteiloberfläche der beschichteten Bauteile durch eine Auswertung der Prozesswerte ermittelt wird. Es wird also ermittelt, welche Position auf der Bauteiloberfläche gerade beschichtet wurde, als die qualitätsrelevanten Auffälligkeiten der Prozesswerte auftraten.

Bei der Auswertung der Prozesswerte werden also zum einen die qualitätsrelevanten Auffälligkeiten ermittelt, die zu Beschichtungsfehlern führen können. Zum anderen wird aber auch die Position der Beschichtungsfehler auf der Bauteiloberfläche ermittelt. Die Ermittlung der Position der Beschichtungsfehler auf der Bauteiloberfläche erleichtert die Fehlerbeseitigung und ermöglicht eine grafische Darstellung der Beschichtungsfehler auf einem Bildschirm, wie noch detailliert beschrieben wird. Die Zuordnung zwischen den Beschichtungsfehlern einerseits und den qualitätsrelevanten Auffälligkeiten der Prozesswerte andererseits erleichtert die Optimierung der Prozesswerte zur Verbesserung der Beschichtungsqualität, so dass weniger Erfahrungswissen des Bedieners erforderlich ist.

In dem bevorzugten Ausführungsbeispiel der Erfindung erfolgt eine grafische Darstellung der Bauteile in Form einer grafischen Bauteildarstellung auf einem Bildschirm. Bei der Lackierung von Kraftfahrzeugkarosseriebauteilen können die zu lackierenden Kraftfahrzeugkarosseriebauteile beispielsweise in einer Perspektivansicht oder in anderen Ansichten (z.B. Seitenansicht, Aufsicht, Heckansicht) auf den Bildschirm dargestellt werden. Die zuvor ermittelten Beschichtungsfehler können dann auf der grafischen Bauteildarstellung entsprechend der Position des Beschichtungsfehlers markiert werden. Falls beispielsweise zuvor ermittelt wurde, dass auf dem linken vorderen Kotflügel einer Kraftfahrzeugkarosserie ein Beschichtungsfehler vorliegt, so wird dieser Beschichtungsfehler auch auf der grafischen Wiedergabe der Kraftfahrzeugkarosserie auf dem Bildschirm auf dem vorderen linken Kotflügel entsprechend markiert. Diese grafische Darstellung erleichtert dem Bediener die Fehlererkennung und die Fehlerbeseitigung durch eine entsprechende Anpassung der Prozesswerte.

Hierbei ist zu erwähnen, dass die grafische Bauteildarstellung auf dem Bildschirm beispielsweise zweidimensional (z.B. Aufsicht, Seitenansicht, Heckansicht oder Frontansicht) oder dreidimensional (Perspektivansicht) sein kann.

Die ermittelten qualitätsrelevanten Auffälligkeiten der Prozesswerte werden vorzugsweise zusammen mit den zugehörigen Qualitätswerten in einer Datenbank gespeichert, was eine Auswertung ermöglicht.

Es wurde vorstehend bereits kurz erwähnt, dass die Ermittlung der qualitätsrelevanten Auffälligkeiten der Prozesswerte durch einen Maschinelles-Lernen-Algorithmus erfolgt, der im Rahmen eines Trainingsbetriebs trainiert werden kann. Dieser Trainingsbetrieb des Maschinelles-Lernen-Algorithmus findet vorzugsweise vor dem eigentlichen Vorhersagebetrieb statt, d.h. getrennt von dem eigentlichen Lackierprozess. Es ist jedoch alternativ auch möglich, dass der Trainingsbetrieb des Maschinelles-Lernen-Algorithmus während des Vorhersagebetriebs abläuft, d.h. während des eigentlichen Lackierprozesses. Weiterhin besteht die Möglichkeit, dass vor dem eigentlichen Lackierprozess zunächst ein Trainingsbetrieb stattfindet, um den Maschinelles-Lernen-Algorithmus einzulernen. Anschließend kann der Maschinelles-Lernen-Algorithmus dann im Rahmen des normalen Lackierprozesses weiter optimiert werden.

Das Trainieren des Maschinelles-Lernen-Algorithmus in dem Trainingsbetrieb umfasst üblicherweise mehrere Schritte. So werden zunächst Prozesswerte bei einem Beschichtungsbetrieb ermittelt. Darüber hinaus werden die zugehörigen Qualitätswerte bei dem Beschichtungsbetrieb ermittelt. Die ermittelten Prozesswerte und die ermittelten Qualitätswerte werden dann in einer Zuordnung in einer Datenbank gespeichert. Anschließend wird dann der Maschinelles-Lernen-Algorithmus anhand der in der Datenbank gespeicherten Prozesswerte und der in der Datenbank gespeicherten Qualitätswerte trainiert.

Darüber hinaus sieht die Erfindung vorzugsweise auch vor, dass ein Optimierungsvorschlag ermittelt wird, der angibt, wie die Prozessparameter zur Vermeidung eines aufgetretenen Beschichtungsfehlers optimiert werden können. Der Optimierungsvorschlag wird hierbei vorzugsweise automatisch ermittelt und vorzugsweise auch automatisch umgesetzt. Falls beispielsweise die Analyse der Prozesswerte und die Analyse der Beschichtungsfehler ergibt, dass der Lackstrom zu groß war, so könnte der Optimierungsvorschlag vorsehen, dass der Lackstrom verringert wird. Darüber hinaus wird der Optimierungsvorschlag vorzugsweise auch optisch angezeigt. Es besteht also im Rahmen der Erfindung auch die Möglichkeit, dass der Optimierungsvorschlag nur angezeigt wird, woraufhin der Bediener der Lackieranlage dann entscheiden kann, ob er den Optimierungsvorschlag annimmt und umsetzt.

Der im Rahmen der Erfindung verwendete Begriff von Prozesswerten ist allgemein zu verstehen, und kann Soll-Werte und/oder Ist-Werte der Betriebsgrößen der einzelnen Geräte der Beschichtungsanlage umfassen.

Beispielsweise kann es sich bei den Prozesswerten um mindestens eine der folgenden Betriebsgrößen der Beschichtungsanlage handeln:
- Antriebsgrößen eines Roboterantriebs zum Antrieb eines Beschichtungsroboters, insbesondere Soll-Wert und/oder Ist-Wert von Position, Winkel, Drehzahl und/oder Drehmoment,
- Bahndaten einer Roboterbewegung, insbesondere Soll-Werte und/oder Ist-Werte von Bahnposition und/oder Bahngeschwindigkeit des Applikators im Raum entlang einer Roboterbahn,
- Pumpengrößen einer Beschichtungsmittelpumpe, insbesondere Soll-Werte und/oder Ist-Werte von Durchfluss des Beschichtungsmittels, Fördermenge des Beschichtungsmittels, Pumpendrehzahl, Drehmoment eines Pumpenantriebs,
- Betriebsgrößen eines Dosierkolbens einer Dosierpumpe, insbesondere Soll-Werte und/oder Ist-Werte von Position des Dosierkolbens, Druck am Eingang oder Ausgang der Dosierpumpe, Durchfluss durch die Dosierpumpe, Drehmoment eines Pumpenantriebs,
- Druckmesswerte eines Drucksensors, insbesondere Beschichtungsmitteldruck vor einer Beschichtungsmittelpumpe, Beschichtungsmitteldruck hinter einer Beschichtungsmittelpumpe, Beschichtungsmittel hinter einem Dosierkolben,
- Ventilgrößen eines Ventils, insbesondere Soll-Werte und/oder Ist-Werte eines Beschichtungsmittelventils zur Steuerung des Beschichtungsmittelflusses, insbesondere bei einem Ventil zur Steuerung des Flusses von Lack, Lösemittel, Wasser, Dichtstoff, Dämmstoffe oder Klebstoffe,
- Betriebsgrößen eines Luftdruckreglers, insbesondere Soll-Werte und/oder Ist-Werte von Druck, Durchflussmenge von Medien, insbesondere von Lenkluft, Zerstäuberluft, Hornluft oder Freihalteluft,
- Betriebsgrößen eines Drehzahlreglers, insbesondere Soll-Werte und/oder Ist-Werte von Drehzahl, Motorluftdruck, Motorluftmenge bei einem Rotationszerstäuber,
- Betriebsgrößen eines Farbdruckreglers, insbesondere Soll-Werte und/oder Ist-Werte von Farbdruck und/oder Durchflussmenge,
- Betriebsgrößen einer elektrostatischen Beschichtungsmittelaufladung, insbesondere Soll-Werte und/oder Ist-Werte von Spannung und/oder Strom der elektrostatischen Beschichtungsmittelaufladung,
- Betriebsgrößen einer Kabinenklimatisierung einer Beschichtungskabine, insbesondere Soll-Werte und/oder Ist-Werte von Lufttemperatur, Luftfeuchte und/oder Luftsinkgeschwindigkeit in der Beschichtungskabine,
- Verschleißgrößen, insbesondere Zählerstand eines Verschleißzählers oder Betriebsstunden die vorzugsweise auf eine Maschinenkomponente gespeichert sind, insbesondere in einem RFID-Tag (RFID: Radio-frequency and identification),
- Ist-Werte von Näherungssensoren, insbesondere von kapazitiven oder induktiven Näherungssensoren,
- Typ und Eigenschaften von Feldbusteilnehmern, Verbindungszustand oder Fehlerzähler von Feldbussystemen,
- Ist-Werte von Temperatursensoren, insbesondere an Antrieben, an dem Applikator oder an der Materialversorgung,
- Störungsmeldungen der an dem Beschichtungsprozess beteiligten Geräte, insbesondere von Applikationsrobotern, Handlingsrobotern, SPS/Zellensteuerung, Reinigungsgeräten, Fördertechnik, Kabinenkonditionierung und/oder, Vorbehandlung,
- Werkstückidentifikationsnummern zur Identifikation der zu beschichtenden Bauteile,
- Eigenschaften des Beschichtungsmittels, insbesondere von Farbe, Farbnummer, Farbcode, Klebstofftyp, Viskosität, Lagertemperatur, Applikationstemperatur, Charge,
- Zeitstempel der Erfassungszeitpunkte der Betriebsgrößen.

Hierbei ist zu erwähnen, dass beliebige Kombinationen der vorstehend genannten Betriebsgrößen als Prozesswerte ausgewertet werden können. In der Praxis wird ein kompletter Satz aus zahlreichen Betriebsgrößen als Prozesswerte ausgewertet und im Rahmen der Qualitätskontrolle berücksichtigt.

Weiterhin ist zu erwähnen, dass die zu beschichtenden Bauteile vorzugsweise in mehreren nebeneinander verlaufenden Beschichtungsbahnen beschichtet werden, wie es an sich aus dem Stand der Technik bekannt ist. Die nebeneinander verlaufenden Beschichtungsbahnen überlappen dann an ihren Rändern und bilden einen durchgehenden Beschichtungsfilm auf dem Bauteil. Die Prozesswerte können hier bei jeweils individuell für die einzelnen Beschichtungsbahnen ermittelt werden, um individuell für jede der Beschichtungsbahnen eine Qualitätskontrolle durchführen zu können.

Es ist jedoch auch möglich, dass die Prozesswerte jeweils die aktuell beschichtete Beschichtungsbahn und mindestens eine der benachbarten Beschichtungsbahnen betreffen.

Es wurde bereits vorstehend erwähnt, dass im Rahmen der Erfindung Qualitätswerte ermittelt werden, die die Qualität des Beschichtungsprozesses wiedergeben. Beispielsweise kann es sich bei diesen Qualitätswerten um mindestens eine der folgenden Größen handeln:
- Anzahl der Beschichtungsfehler bei dem jeweiligen Bauteil,
- Position der Beschichtungsfehler im Raum, in Bezug auf das Bauteil oder in Bezug auf die beschichtete Teilfläche,
- Art der Beschichtungsfehler.

Weiterhin ist zu erwähnen, dass die Erfindung nicht nur Schutz beansprucht für das vorstehend beschriebene erfindungsgemäße Betriebsverfahren. Vielmehr beansprucht die Erfindung auch Schutz für eine Beschichtungsanlage, die entsprechend ausgebildet ist, um das erfindungsgemäße Betriebsverfahren auszuführen.

Hierzu weist die erfindungsgemäße Beschichtungsanlage zunächst mindestens einen Applikator (z.B. Rotationszerstäuber) auf, der dazu dient, dass Beschichtungsmittel (z.B. Lack) auf ein Bauteil (z.B. Kraftfahrzeugkarosseriebauteil) zu applizieren.

Darüber hinaus weist die erfindungsgemäße Beschichtungsanlage mindestens einen Beschichtungsroboter auf, um den Applikator zu bewegen.

Die Steuerung des Beschichtungsroboters und des Applikators erfolgt hierbei durch ein Steuersystem, was an sich aus dem Stand der Technik bekannt ist.

Die Erfindung sieht nun vor, dass das Steuersystem zur Durchführung des erfindungsgemäßen Betriebsverfahrens ausgebildet ist. Hierzu ist in dem Steuersystem üblicherweise ein entsprechendes Steuerprogramm abgespeichert, dass bei einer Ausführung auf dem Steuersystem das Betriebsverfahren gemäß der Erfindung ausführt.

Hierbei ist zu erwähnen, dass das Steuersystem vorzugsweise mehrere verschiedene Systemkomponenten aufweist, die unterschiedliche Funktionen erfüllen. Die einzelnen Systemkomponenten können hierbei auch als Software-Module in einem einzigen Rechner konzentriert sein. Es ist jedoch alternativ auch möglich, dass die einzelnen Systemkomponenten als separate Hardware-Komponenten realisiert sind.

Beispielsweise kann das Steuersystem der erfindungsgemäßen Beschichtungsanlage folgende Systemkomponenten aufweisen:
- Mindestens eine Robotersteuerung zur Ansteuerung des Beschichtungsroboters, wobei die Robotersteuerung oder eine zusätzliche Erfassungseinrichtung zumindest einen Teil der Prozesswerte liefern,
- mindestens eine weitere Steuerung zusätzlich zu der Robotersteuerung, insbesondere in Form einer Zellensteuerung, die eine Roboterzelle steuert, wobei diese weitere Steuerung zumindest einen Teil der Prozesswerte liefert,
- einen Datenbankrechner mit einer Datenbank zur Speicherung der Prozesswerte und der zugehörigen Qualitätswerte,
- einen Qualitätswerterechner zur manuellen oder automatischen Erfassung der Qualitätswerte,
- einen Verbindungsrechner, wobei der Verbindungsrechner die Prozesswerte von der mindestens einen Robotersteuerung und/oder von der weiteren Steuerung aufnimmt und an den Datenbankrechner weiterleitet, und die Qualitätswerte von dem Qualitätswerterechner aufnimmt und an den Datenbankrechner weiterleitet.
- einen KI-Rechner, der die Prozesswerte und die zugehörigen Qualitätswerte von dem Datenbankrechner erhält und mittels des Maschinelles-Lernen-Algorithmus die qualitätsrelevanten Auffälligkeiten der Prozesswerte und die zugehörige Position auf dem Bauteil ermittelt, und die ermittelten qualitätsrelevanten Auffälligkeiten zur Speicherung in der Datenbank an den Datenbankrechner,
- einen Darstellungsrechner zur grafischen Darstellung des Beschichtungsfehlers auf der grafischen Bauteildarstellung entsprechend der Position des Beschichtungsfehlers auf der Bauteiloberfläche.

Die Erkennung der Zusammenhänge zwischen den aufgezeichneten Prozesswerten und den Qualitätsdaten erfolgt bevorzugt durch Trainieren eines binären oder mehrklassigen Klassifikators (mehrklassig im Sinne der Klassifizierung verschiedener Lackierfehlerarten, z.B. Mager, Krater etc.)

Die Zuordnung von Prozesswerten zu den Messstellen der Qualitätsmessungen erfolgt bevorzugt über die ebenso aufgezeichneten Roboterbahnen. Für eine Qualitätsmessstelle werden bevorzugt die Prozesswerte als erklärende Merkmale in Betracht gezogen, für welche die Distanz des Applikators zur Messstelle einen definierten Messwert nicht übersteigt.

Hieraus ergibt sich eine Zuordnung von Zeitreihen zu Qualitätsmessungen. Zur Vereinfachung können aus den Zeitreihen Aggregationen gebildet werden, um die Komplexität des Klassifikators zu verringern.

Neben den über die Roboterbahnen zugeordneten Prozesswerten können noch weitere Merkmale über den Klassifikator einbezogen werden, wie z.B. der Wartungszustand einzelner Komponenten, Kabinenzustand (insbesondere Temperatur, Feuchte)

Für den Klassifikator kommen insbesondere folgende Maschinelles-Lernen-Algorithmen in Frage: Gradient Boosting, LSTM (Long short-term memory), künstliches neuronales Netzwerk, SVM (Support Vector Machine).

Die Kalibrierung sowie die eigentliche Durchführung des Trainingsvorgangs erfolgt bevorzugt mit Hilfe der erwähnten Software-Tools nach "Best Practices" zum Trainieren eines Klassifikators, d.h. die Erfindung erfordert diesbezüglich kein neuartiges Vorgehen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.

### Kurzbeschreibung der Zeichnungen

Figur 1 zeigt ein Flussdiagramm zur Verdeutlichung des Trainingsbetriebs des Maschinelles-Lernen-Algorithmus zur Erkennung der qualitätsrelevanten Auffälligkeiten der Prozesswerte.
Figur 2 zeigt ein Flussdiagramm zur Verdeutlichung des Vorhersagebetriebs während des eigentlichen Lackierprozesses.
Figur 3 zeigt eine schematische Darstellung einer erfindungsgemäßen Lackieranlage.
Figur 4 zeigt eine Bildschirmdarstellung mit einer Perspektivansicht einer Kraftfahrzeugkarosserie und einer Markierung von Beschichtungsfehlern.
Figur 5 zeigt eine Abwandlung von Figur 4.

### Detaillierte Beschreibung der Zeichnungen

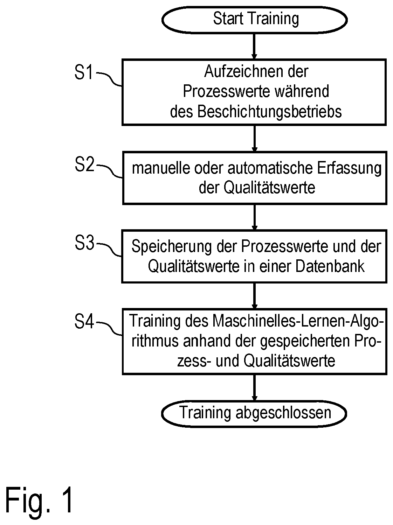

Im Folgenden wird nun zunächst das Flussdiagramm gemäß Figur 1 beschrieben, das den Trainingsbetrieb des Maschinelles-Lernen-Algorithmus zeigt. Die Aufgabe des Trainingsbetriebs besteht darin, dass der Maschinelles-Lernen-Algorithmus die qualitätsrelevanten Auffälligkeiten der Prozesswerte erkennen kann.

In einem ersten Schritt S1 werden hierzu in einem Beschichtungsbetrieb Prozesswerte gemessen und aufgezeichnet. Bei den Prozesswerten kann es sich um eine Vielzahl von Betriebsgrößen von Geräten handeln, die am Lackierprozess beteiligt sind. Beispielsweise kann es sich hierbei um den Lackstrom, den Lenkluftstrom, die Ladespannung einer elektrostatischen Lackaufladung oder die Bahngeschwindigkeit des Lackierroboters handeln, um nur einige Beispiele zu nennen. Vorzugsweise wird jedoch eine Vielzahl unterschiedlicher Prozesswerte gemessen und aufgezeichnet, um die Auswertung der Prozesswerte möglichst aussagekräftig zu machen.

In einem weiteren Schritt S2 erfolgt dann eine Erfassung und Aufzeichnung von Qualitätswerten, die die Qualität des Lackierprozesses wiedergeben. Beispielsweise können diese Qualitätswerte die Schichtdicke, die Ebenheit, den Farbton, die Härte, den Glanzgrad oder weitere Eigenschaften des aufgebrachten Lachs wiedergeben.

Im nächsten Schritt S3 werden dann die zuvor ermittelten Prozesswerte zusammen mit den ebenfalls ermittelten Qualitätswerten in einer Datenbank gespeichert und zwar in einer Zuordnung zueinander. Beispielsweise können die Prozesswerte und die Qualitätswerte jeweils mit einem Zeitstempel gespeichert werden, was die spätere Auswertung erleichtert.

Anschließend wird der Maschinelles-Lernen-Algorithmus dann anhand der in der Datenbank gespeicherten Prozesswerte und der ebenfalls in der Datenbank gespeicherten Qualitätswerte trainiert, um qualitätsrelevante Auffälligkeiten der Prozesswerte erkennen zu können.

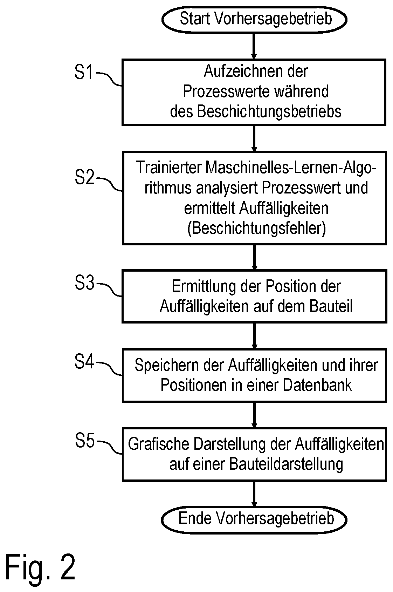

Im Folgenden wird nun das Flussdiagramm gemäß Figur 2 beschrieben, das den eigentlichen Vorhersagebetrieb beschreibt, der während des eigentlichen Lackierprozesses abläuft.

In einem ersten Schritt S1 werden hierbei wieder Prozesswerte gemessen und aufgezeichnet, wobei diese Prozesswerte im normalen Lackierprozess anfallen.

Im nächsten Schritt S2 analysiert der zuvor trainierte Maschinelles-Lernen-Algorithmus dann die gemessenen Prozesswerte und ermittelt qualitätsrelevante Auffälligkeiten, die auf Beschichtungsfehler hindeuten.

In einem weiteren Schritt S3 wird dann die Position auf dem Bauteil ermittelt, die den qualitätsrelevanten Auffälligkeiten der Prozesswerte zuzuordnen ist.

Anschließend werden die ermittelten Auffälligkeiten der Prozesswerte zusammen mit der Position auf dem Bauteil in einem Schritt S4 in einer Datenbank gespeichert.

In einem nächsten Schritt S5 erfolgt dann eine grafische Darstellung der Auffälligkeiten der Prozesswerte auf einer Bauteildarstellung, um dem Benutzer eine Fehleranalyse zu ermöglichen und die Fehlerbeseitigung zu erleichtern.

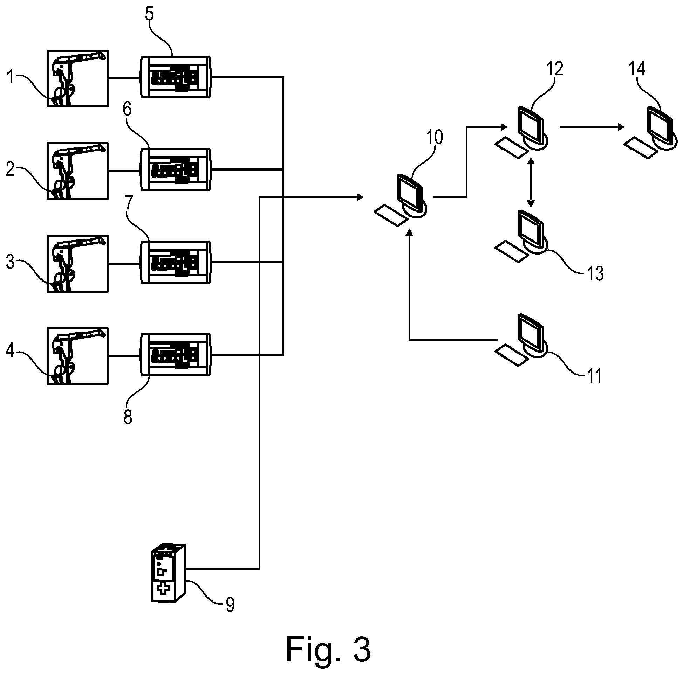

Im Folgenden wird nun die schematische Darstellung einer erfindungsgemäßen Lackieranlage in Figur 3 beschrieben.

So weist die erfindungsgemäße Lackieranlage mehrere Lackierroboter 1-4 auf, die von jeweils einer Robotersteuerung 5-8 angesteuert werden.

Darüber hinaus ist eine separate Zellensteuerung 9 vorgesehen, die übergeordnet die einzelnen Geräte in einer Lackierzelle (Lackierkabine) steuert.

Die Robotersteuerung 5-8 und die Zellensteuerung 9 sind mit einem Verbindungsrechner 10 verbunden, was einen Datenaustausch ermöglicht. So erhält der Verbindungsrechner 10 von den Robotersteuerungen 5-8 und auch von der Zellensteuerung 9 zahlreiche Prozesswerte, wie Soll-Werte und Ist-Werte von Geräten innerhalb der jeweiligen Lackierzelle.

Der Verbindungsrechner 10 ist mit einem Qualitätswerterechner 11 verbunden, der Qualitätswerte liefert, die gemessen wurden und die Qualität des Lackierprozesses wiedergeben. Diese Qualitätswerte dienen im Wesentlichen zum Trainieren eines Maschinelles-Lernen-Algorithmus zur Erkennung von qualitätsrelevanten Auffälligkeiten der Prozesswerte.

Darüber hinaus ist der Verbindungsrechner 10 mit einem Datenbankrechner 12 verbunden, der von dem Verbindungsrechner 10 die Prozesswerte und die zugehörigen Qualitätswerte erhält.

Der Datenbankrechner 12 ist wiederum mit einem KI-Rechner 13 verbunden, in dem ein Maschinelles-Lernen-Algorithmus qualitätsrelevante Auffälligkeiten der Prozesswerte ermittelt und an den Datenbankrechner 12 zurückmeldet.

Der Datenbankrechner 12 ist schließlich auch mit einem Darstellungsrechner 14 verbunten, der einen Bildschirm aufweist und auf dem Bildschirm eine grafische Darstellung der lackierten Kraftfahrzeugkarosseriebauteile mit etwaigen Lackierfehlern zeigt, wie noch detailliert beschrieben wird.

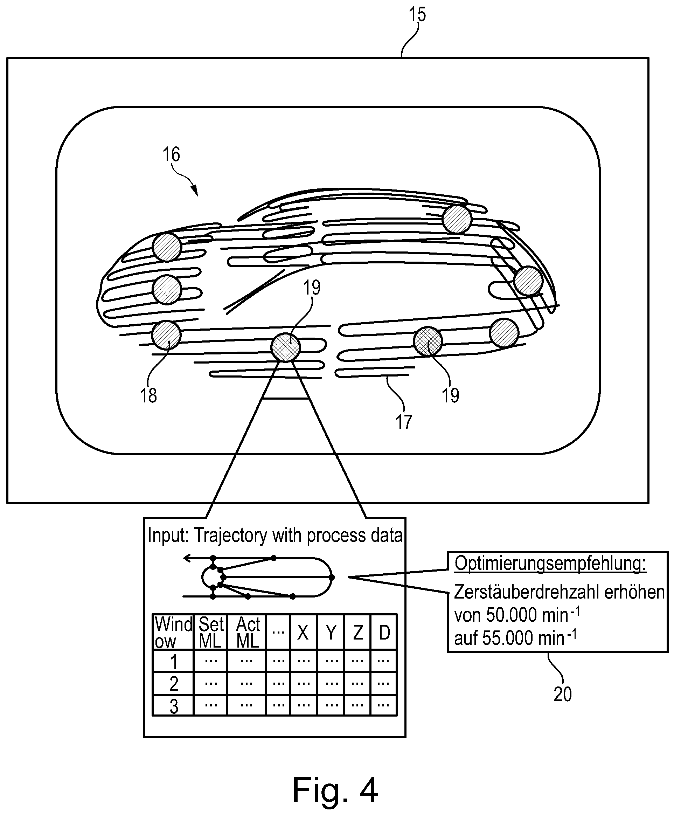

Figur 4 zeigt eine exemplarische Darstellung eines Bildschirms 15 des Darstellungsrechners 14 mit einer Karosseriedarstellung 16. Hierbei sind auch die einzelnen Lackierbahnen 17 grafisch dargestellt, entlang derer der Zerstäuber die Kraftfahrzeugkarosserie lackiert. Darüber hinaus sind auf der Karosseriedarstellung 16 unauffällige Punkte 18 und auffällige Punkte 19 markiert, wobei die auffälligen Punkte 19 mit hoher Wahrscheinlichkeit Beschichtungsfehler anzeigen, wie sich aus der Auswertung der gemessenen Prozesswerte ergibt.

Darüber hinaus wird auf dem Bildschirm 15 noch eine Optimierungsempfehlung 20 angezeigt. Die Optimierungsempfehlung 20 besteht in diesem Ausführungsbeispiel darin, die Zerstäuberdrehzahl des Rotationszerstäubers von 50.000 UpM auf 55.000 UpM zu erhöhen. Hierbei handelt es sich jedoch lediglich um ein Beispiel zur Verdeutlichung der Erfindung. Der Bediener der Lackieranlage kann dann die Optimierungsempfehlung 20 übernehmen und umsetzen.

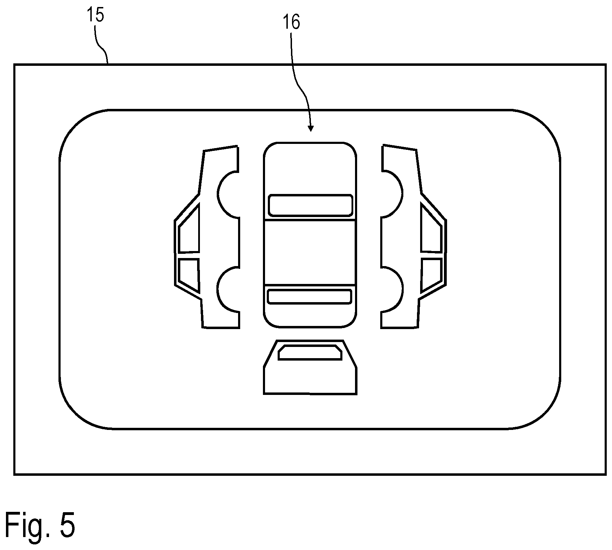

Figur 5 zeigt eine Abwandlung von Figur 5 mit einer anderen Karosseriedarstellung 16, die hierbei nur zweidimensional ist und zwei Seitenansichten, eine Aufsicht und eine Heckansicht umfasst. Ansonsten wird zur Vermeidung von Wiederholungen auf die vorstehende Beschreibung verwiesen.

### Bezugszeichenliste:

- 1-4: Lackierroboter
- 5-8: Robotersteuerungen
- 9: Zellensteuerung
- 10: Verbindungsrechner
- 11: Qualitätswerterechner
- 12: Datenbankrechner
- 13: Kl-Rechner
- 14: Darstellungsrechner
- 15: Bildschirm
- 16: Karosseriedarstellung auf dem Bildschirm
- 17: Lackierbahnen auf der Karosseriedarstellung
- 18: Unauffällige Punkte auf der Karosseriedarstellung
- 19: Auffällige Punkte auf der Karosseriedarstellung
- 20: Optimierungsempfehlung auf dem Bildschirm

## Patentansprüche

1. Betriebsverfahren für eine Beschichtungsanlage zur Beschichtung von Bauteilen mit einem Beschichtungsmittel mittels eines Applikators, mit den folgenden Schritten:
a) Beschichten der Bauteile mit dem Beschichtungsmittel,
a1) wobei bauteilbezogene Prozesswerte anfallen, die Betriebsgrößen von Geräten der Beschichtungsanlage bei der Beschichtung der einzelnen Bauteile wiedergeben, und
a2) wobei sich bei der Beschichtung der einzelnen Bauteile eine bestimmte bauteilbezogene Beschichtungsqualität ergibt,
b) Ermitteln der bauteilbezogenen Prozesswerte der Beschichtungsanlage,
c) Ermitteln von qualitätsrelevanten Auffälligkeiten der Prozesswerte zur Erkennung von Beschichtungsfehlern (19) bei der Beschichtung der einzelnen Bauteile im Rahmen eines Vorhersagebetriebs mittels eines Maschinelles-Lernen-Algorithmus bei der Beschichtung der Bauteile, wobei der Maschinelles-Lernen-Algorithmus in einem Trainingsbetrieb anhand von in einer Datenbank gespeicherten Prozesswerten und zugehörigen Qualitätswerten trainiert wurde,
**gekennzeichnet durch** folgende Schritte:
d) Ermitteln der Position der den Auffälligkeiten entsprechenden Beschichtungsfehler (19) auf der Bauteiloberfläche der beschichteten Bauteile **durch** eine Auswertung der Prozesswerte.

2. Betriebsverfahren nach Anspruch 1, **gekennzeichnet durch** folgenden Schritt:
Ermitteln von bauteilbezogenen Qualitätswerten, wobei die Qualitätswerte die Beschichtungsqualität der einzelnen Bauteile wiedergeben.

3. Betriebsverfahren nach Anspruch 1 oder 2, **gekennzeichnet durch** folgende Schritte:
a) Grafische Darstellung der Bauteile in Form einer grafischen Bauteildarstellung (16) auf einem Bildschirm (15), wobei die grafische Bauteildarstellung (16) auf dem Bildschirm (15) vorzugsweise zweidimensional oder dreidimensional ist, und
b) Grafische Markierung des Beschichtungsfehlers (19) auf der grafischen Bauteildarstellung (16) auf dem Bildschirm (15) entsprechend der Position des Beschichtungsfehlers (19) auf der Bauteiloberfläche.

4. Betriebsverfahren nach einem der vorhergehenden Ansprüche, **dadurch gekennzeichnet, dass** die Prozesswerte Soll-Werte und/oder Ist-Werte der Betriebsgrößen der Geräte der Beschichtungsanlage sind.

5. Betriebsverfahren nach Anspruch 4, **dadurch gekennzeichnet, dass** die ermittelten qualitätsrelevanten Auffälligkeiten der Prozesswerte zusammen mit den zugehörigen Qualitätswerten in einer Datenbank gespeichert werden.

6. Betriebsverfahren nach einem der vorhergehenden Ansprüche, **gekennzeichnet durch** folgende Schritte zum Trainieren des Maschinelles-Lernen-Algorithmus in dem Trainingsbetrieb:
a) Ermitteln der Prozesswerte bei einem Beschichtungsbetrieb,
b) Ermitteln der zugehörigen Qualitätswerte bei dem Beschichtungsbetrieb,
c) Speichern der ermittelten Prozesswerte und der ermittelten Qualitätswerte in der Datenbank,
d) Trainieren des Maschinelles-Lernen-Algorithmus anhand der in der Datenbank gespeicherten Prozesswerte und der in der Datenbank gespeicherten Qualitätswerte.

7. Betriebsverfahren nach einem der vorhergehenden Ansprüche,
**gekennzeichnet durch** folgende Schritte:
a) Ermitteln eines Optimierungsvorschlags (20) zur Optimierung der Prozesswerte zur Vermeidung des Beschichtungsfehlers,
b) Automatische Umsetzung des Optimierungsvorschlags (20) oder
c) Anzeigen des Optimierungsvorschlags (20).

8. Betriebsverfahren nach einem der vorhergehenden Ansprüche, **dadurch gekennzeichnet, dass** die Prozesswerte mindestens eine der folgenden Betriebsgrößen umfassen:
a) Antriebsgrößen eines Roboterantriebs zum Antrieb eines Beschichtungsroboters, insbesondere Soll-Wert und/oder Ist-Wert von Position, Winkel, Drehzahl und/oder Drehmoment,
b) Bahndaten einer Roboterbewegung, insbesondere Soll-Werte und/oder Ist-Werte von Bahnposition und/oder Bahngeschwindigkeit des Applikators im Raum entlang einer Roboterbahn,
c) Pumpengrößen einer Beschichtungsmittelpumpe, insbesondere Soll-Werte und/oder Ist-Werte von Durchfluss des Beschichtungsmittels, Fördermenge des Beschichtungsmittels, Pumpendrehzahl, Drehmoment eines Pumpenantriebs,
d) Betriebsgrößen eines Dosierkolben einer Dosierpumpe, insbesondere Soll-Werte und/oder Ist-Werte von Position des Dosierkolbens, Druck am Eingang oder Ausgang der Dosierpumpe, Durchfluss durch die Dosierpumpe, Drehmoment eines Pumpenantriebs,
e) Druckmesswerte eines Drucksensors, insbesondere Beschichtungsmitteldruck vor einer Beschichtungsmittelpumpe, Beschichtungsmitteldruck hinter einer Beschichtungsmittelpumpe, Beschichtungsmittel hinter einem Dosierkolben,
f) Ventilgrößen eines Ventils, insbesondere Soll-Werte und/oder Ist-Werte eines Beschichtungsmittelventils zur Steuerung des Beschichtungsmittelflusses, insbesondere bei einem Ventil zur Steuerung des Flusses von Lack, Lösemittel, Wasser, Dichtstoff, Dämmstoffe oder Klebstoffe,
g) Betriebsgrößen eines Luftdruckreglers, insbesondere Soll-Werte und/oder Ist-Werte von Druck, Durchflussmenge von Medien, insbesondere von Lenkluft, Zerstäuberluft, Hornluft oder Freihalteluft,
h) Betriebsgrößen eines Drehzahlreglers, insbesondere Soll-Werte und/oder Ist-Werte von Drehzahl, Motorluftdruck, Motorluftmenge bei einem Rotationszerstäuber,
i) Betriebsgrößen eines Farbdruckreglers, insbesondere Soll-Werte und/oder Ist-Werte von Farbdruck und/oder Durchflussmenge,
j) Betriebsgrößen einer elektrostatischen Beschichtungsmittelaufladung, insbesondere Soll-Werte und/oder Ist-Werte von Spannung und/oder Strom der elektrostatischen Beschichtungsmittelaufladung,
k) Betriebsgrößen einer Kabinenklimatisierung einer Beschichtungskabine, insbesondere Soll-Werte und/oder Ist-Werte von Lufttemperatur, Luftfeuchte und/oder Luftsinkgeschwindigkeit in der Beschichtungskabine,
l) Verschleißgrößen, insbesondere Zählerstand eines Verschleißzählers oder Betriebsstunden die vorzugsweise auf eine Maschinenkomponente gespeichert sind, insbesondere in einem RFID-Tag,
m) Ist-Werte von Näherungssensoren, insbesondere von kapazitiven oder induktiven Näherungssensoren,
n) Typ und Eigenschaften von Feldbusteilnehmern, Verbindungszustand oder Fehlerzähler von Feldbussystemen,
o) Ist-Werte von Temperatursensoren, insbesondere an Antrieben, an dem Applikator oder an der Materialversorgung,
p) Störungsmeldungen der an dem Beschichtungsprozess beteiligten Geräte, insbesondere von Applikationsrobotern, Handlingsrobotern, SPS/Zellensteuerung, Reinigungsgeräten, Fördertechnik, Kabinenkonditionierung und/oder, Vorbehandlung,
q) Werkstückidentifikationsnummern zur Identifikation der zu beschichtenden Bauteile,
r) Eigenschaften des Beschichtungsmittels, insbesondere von Farbe, Farbnummer, Farbcode, Klebstofftyp, Viskosität, Lagertemperatur, Applikationstemperatur, Charge,
s) Zeitstempel der Erfassungszeitpunkte der Betriebsgrößen.

9. Betriebsverfahren nach einem der vorhergehenden Ansprüche, **dadurch gekennzeichnet,**
a) **dass** die Bauteile jeweils in nebeneinander verlaufenden Beschichtungsbahnen beschichtet werden, und
b) **dass** die Prozesswerte jeweils die aktuell beschichtete Beschichtungsbahn und auch die benachbarten Beschichtungsbahnen betreffen.

10. Betriebsverfahren nach einem der vorhergehenden Ansprüche, **dadurch gekennzeichnet, dass** die Qualitätswerte mindestens eine der folgenden Größen umfassen:
a) Anzahl der Beschichtungsfehler (19) bei dem jeweiligen Bauteil,
b) Position der Beschichtungsfehler (19) im Raum, in Bezug auf das Bauteil oder in Bezug auf die beschichtete Teilfläche,
c) Art der Beschichtungsfehler (19).

11. Betriebsverfahren nach einem der vorhergehenden Ansprüche, **dadurch gekennzeichnet,**
a) **dass** die zu beschichtenden Bauteile Kraftfahrzeugkarosseriebauteile sind, und/oder
b) **dass** das Beschichtungsmittel ein Lack, ein Klebstoff, ein Dichtmittel oder ein Dämmstoff ist, und/oder
c) **dass** der Applikator ein Druckkopf oder ein Zerstäuber ist, insbesondere ein Rotationszerstäuber.

12. Beschichtungsanlage zur Beschichtung von Bauteilen mit einem Beschichtungsmittel, mit
a) mindestens einem Applikator zur Applikation des Beschichtungsmittels, insbesondere in Form eines Rotationszerstäubers,
b) mindestens einem Beschichtungsroboter (1-4) zum Bewegen des Applikators, und
c) einem Steuersystem (5-15) zur Steuerung des Beschichtungsroboters und des Applikators,
**dadurch gekennzeichnet,**
d) **dass** das Steuersystem (5-14) zur Durchführung des Betriebsverfahrens nach einem der vorhergehenden Ansprüche ausgebildet ist.

13. Beschichtungsanlage nach Anspruch 12, **dadurch gekennzeichnet, dass** das Steuersystem mindestens eine der folgenden Systemkomponenten aufweist:
a) mindestens eine Robotersteuerung (5-8) zur Ansteuerung des Beschichtungsroboters (1-4), wobei die Robotersteuerung (5-8) oder eine zusätzliche Erfassungseinrichtung zumindest einen Teil der Prozesswerte liefern, und/oder
b) mindestens eine weitere Steuerung (9) zusätzlich zu der Robotersteuerung, insbesondere in Form einer Zellensteuerung (9), die eine Roboterzelle steuert, wobei diese weitere Steuerung (9) zumindest einen Teil der Prozesswerte liefert,
c) einen Datenbankrechner (12) mit einer Datenbank zur Speicherung der Prozesswerte und der zugehörigen Qualitätswerte,
d) einen Qualitätswerterechner (11) zur manuellen oder automatischen Erfassung der Qualitätswerte,
e) einen Verbindungsrechner (10), der
e1) die Prozesswerte von der mindestens einen Robotersteuerung (5-8) und/oder von der weiteren Steuerung (9) aufnimmt und an den Datenbankrechner (12) weiterleitet, und/oder
e2) die Qualitätswerte von dem Qualitätswerterechner (11) aufnimmt und an den Datenbankrechner (12) weiterleitet,
f) einen KI-Rechner (13), der
f1) die Prozesswerte und die zugehörigen Qualitätswerte von dem Datenbankrechner (12) erhält und mittels des Maschinelles-Lernen-Algorithmus die qualitätsrelevanten Auffälligkeiten der Prozesswerte und die zugehörige Position auf dem Bauteil ermittelt, und
f2) die ermittelten qualitätsrelevanten Auffälligkeiten zur Speicherung in der Datenbank an den Datenbankrechner (12) übermittelt,
g) einen Darstellungsrechner (14) zur grafischen Darstellung des Beschichtungsfehlers (19) auf der grafischen Bauteildarstellung (16) entsprechend der Position des Beschichtungsfehlers (19) auf der Bauteiloberfläche.

14. Beschichtungsanlage nach Anspruch 13, **dadurch gekennzeichnet,**
a) **dass** die Systemkomponenten (5-15) des Steuersystems (5-15) als separate Hardware-Komponenten ausgebildet sind, oder
b) **dass** die Systemkomponenten (5-15) des Steuersystems (5-15) jeweils Hardware-Module oder Software-Module in einem einheitlichen Steuerrechner bilden,
c) **dass** mindestens zwei, mindestens drei, mindestens vier, mindestens fünf oder alle der folgenden Systemkomponenten (5-15) in einem einheitlichen Rechner integriert sind:
c1) der Verbindungsrechner (10),
c2) der Datenbankrechner (12),
c3) der Kl-Rechner (13),
c4) der Steuerrechner,
c5) der Darstellungsrechner (14),
c6) der Qualitätswerterechner (11).

## Claims

1. Operating method for a coating system for coating components with a coating agent by means of an applicator, with the following steps:
a) coating the components with the coating agent,
a1) wherein component-related process values are obtained which represent operating variables of devices of the coating system during the coating of the individual components, and
a2) wherein a specific component-related coating quality results during the coating of the individual components,
b) determining the component-related process values of the coating equipment,
c) determining quality-relevant anomalies of the process values for detecting coating defects (19) during the coating of the individual components in the context of a prediction operation by means of a machine-learning algorithm during the coating of the components, wherein the machine-learning algorithm is trained in the course of a training operation on the basis of process values stored in the database and associated quality values,
**characterized by** the following steps:
d) Determining the position of the coating defects (19) corresponding to the anomalies on the component surface of the coated components by evaluating the process values.

2. Operating method according to claim 1, **characterized by** the following step:
Determination of component-specific quality values, wherein the quality values represent the coating quality of the individual components.

3. Operating method according to claim 1 or 2, **characterized by** the following steps:
a) graphically representing the components in the form of a graphical component representation (16) on a display screen (15), wherein the graphical component representation (16) on the display screen (15) is two-dimensional or three-dimensional, and
b) graphically marking the coating defect (19) on the graphical component representation (16) on the screen (15) according to the position of the coating defect (19) on the component surface.

4. Operating method according to one of the preceding claims, **characterized in that** the process values are target values and/or actual values of the operating variables of the devices of the coating system.

5. Operating method according to claim 4, **characterized in that** the determined quality-relevant anomalies of the process values are stored in a database together with the associated quality values.

6. Operating method according to one of the preceding claims, **characterized by** the following steps for training the machine learning algorithm in the training operation:
a) determining the process values during a coating operation,
b) determining the associated quality values during the coating operation,
c) storing the determined process values and the determined quality values in the database,
d) training the machine-learning algorithm on the basis of the process values stored in the database and the quality values stored in the database.

7. Operating method according to any of the preceding claims,
**characterized by** the following steps:
a) determining an optimization proposal (20) for optimizing the process values to avoid the coating defect,
b) automatic implementation of the optimization proposal (20), or
c) display of the optimization proposal (20).

8. Operating method according to one of the preceding claims, **characterized in that** the process values comprise at least one of the following operating variables:
a) Drive variables of a robot drive for driving a coating robot, in particular target value and/or actual value of position, angle, rotational speed and/or rotational torque,
b) path data of a robot movement, in particular target values and/or actual values of path position and/or path speed of the applicator in space along a robot path,
c) pump variables of a coating agent pump, in particular target values and/or actual values of flow rate of the coating agent, delivery rate of the coating agent, pump speed, torque of a pump drive,
d) operating variables of a metering piston of a metering pump, in particular target values and/or actual values of position of the metering piston, pressure at the inlet or outlet of the metering pump, flow rate through the metering pump, torque of a pump drive,
e) pressure measured values of a pressure sensor, in particular coating agent pressure upstream of a coating agent pump, coating agent pressure downstream of a coating agent pump, coating agent downstream of a metering piston,
f) valve variables of a valve, in particular target values and/or actual values of a coating agent valve for controlling the flow of coating agent, in particular in a valve for controlling the flow of paint, solvent, water, sealant, insulating materials or adhesives,
g) operating variables of an air pressure regulator, in particular target values and/or actual values of pressure, flow rate of media, in particular of shaping air, atomizing air, horn air or free-flow air,
h) operating variables of a speed controller, in particular target values and/or actual values of speed, motor air pressure, motor air quantity in the case of a rotary atomizer,
i) operating variables of a paint pressure controller, in particular target values and/or actual values of paint pressure and/or flow rate,
j) operating variables of an electrostatic coating agent charging system, in particular target values and/or actual values of voltage and/or current of the electrostatic coating agent charging system,
k) operating variables of a booth air conditioning system of a coating booth, in particular target values and/or actual values of air temperature, air humidity and/or air sink rate in the coating booth,
l) wear variables, in particular the counter reading of a wear counter or operating hours, which are preferably stored on a machine component, in particular in an RFID tag,
m) actual values of proximity sensors, in particular capacitive or inductive proximity sensors,
n) type and characteristics of field bus participants, connection status or error counters of field bus systems,
o) actual values of temperature sensors, in particular on drives, on the applicator or on the material supply,
p) fault messages from the equipment involved in the coating operation, in particular from application robots, handling robots, PLC/cell control, cleaning equipment, conveyor technology, booth conditioning and/or, pre-treatment,
q) workpiece identification numbers to identify the components to be coated,
r) properties of the coating agent, in particular color, color number, color code, adhesive type, viscosity, storage temperature, application temperature, batch,
s) time stamp of the recording times of the operating variables.

9. Operating method according to one of the preceding claims, **characterized in,**
a) **that** the components are each coated in coating tracks running next to one another, and
b) **that** the process values relate in each case to the currently coated coating track and also to the adjacent coating tracks.

10. Operating method according to one of the preceding claims, **characterized in that** the quality values comprise at least one of the following variables:
a) number of the coating defects (19) in the respective component,
b) position of the coating defects (19) in space, in relation to the component or in relation to the coated partial surface,
c) type of the coating defects (19).

11. Operating method according to one of the preceding claims, **characterized in,**
a) **that** the components to be coated are motor vehicle body components, and/or
b) **that** the coating agent is a paint, an adhesive, a sealant or an insulating material, and/or
c) **that** the applicator is a print head or an atomizer, in particular a rotary atomizer.

12. Coating system for coating components with a coating agent, comprising
a) at least one applicator for applying the coating agent, in particular in the form of a rotary atomizer,
b) at least one coating robot (1-4) for moving the applicator, and
c) a control system (5-15) for controlling the coating robot and the applicator,
**characterized in**
d) **that** the control system (5-14) is adapted to carry out the operating method according to one of the preceding claims.

13. Coating system according to claim 12, **characterized in that** the control system comprises at least one of the following system components:
a) at least one robot controller (5-8) for controlling the coating robot (1-4), the robot controller (5-8) or an additional acquisition device supplying at least part of the process values, and/or
b) at least one further controller (9) in addition to the robot controller, in particular in the form of a cell controller (9), which controls a robot cell, this further controller (9) supplying at least some of the process values,
c) a database computer (12) with a database for storing the process values and the associated quality values,
d) a quality value computer (11) for manual or automatic acquisition of the quality values,
e) a connection computer (10), which
e1) receives the process values from the at least one robot controller (5-8) and/or from the further controller (9) and forwards them to the database computer (12), and/or
e2) receives the quality values from the quality value computer (11) and forwards them to the database computer (12),
f) an AI computer (13) which
f1) receives the process values and the associated quality values from the database computer (12) and determines, by means of the machine-learning algorithm, the quality-relevant anomalies of the process values and the associated position on the component, and
f2) transmits the determined quality-relevant anomalies to the database computer (12) for storage in the data bank,
g) a display computer (14) for graphically displaying the coating defect (19) on the graphical component display (16) in accordance with the position of the coating defect (19) on the component surface.

14. Coating system according to claim 13, **characterized in,**
a) **that** the system components (5-15) of the control system (5-15) are designed as separate hardware components, or
b) **that** the system components (5-15) of the control system (5-15) each form hardware modules or software modules in an integrated control computer,
c) **that** at least two, at least three, at least four, at least five or all of the following system components (5-15) are integrated in an integrated computer:
c1) the connection computer (10),
c2) the database computer (12),
c3) the AI computer (13),
c4) the control computer,
c5) the display computer (14),
c6) the quality value computer (11).

## Revendications

1. Procédé de fonctionnement d'une installation de revêtement destinée au revêtement de composants avec un agent de revêtement au moyen d'un applicateur, comprenant les étapes consistant à :
a) revêtir les composants avec l'agent de revêtement,
a1) des valeurs de procédé relatives au composant étant obtenues, lesquelles valeurs représentent des grandeurs de fonctionnement d'appareils de l'installation de revêtement lors du revêtement de chaque composant, et
a2) une qualité de revêtement déterminée, relative au composant, étant obtenue lors du revêtement de chaque composant,
b) déterminer les valeurs de procédé relatives au composant de l'installation de revêtement,
c) déterminer des anomalies des valeurs de procédé pertinentes pour la qualité, pour la détection de défauts de revêtement (19) lors du revêtement de chaque composant dans le cadre d'un mode de prédiction au moyen d'un algorithme d'apprentissage automatique lors du revêtement des composants, l'algorithme d'apprentissage automatique ayant été entraîné, en mode d'entraînement, sur la base de valeurs de procédé et de valeurs de qualité associées stockées dans une base de données,
**caractérisé par** l'étape consistant à :
d) déterminer la position, sur la surface des composants revêtus, des défauts de revêtement (19) correspondant aux anomalies, par une évaluation des valeurs de procédé.

2. Procédé de fonctionnement selon la revendication 1, **caractérisé par** l'étape consistant à :
déterminer des valeurs de qualité relatives au composant, les valeurs de qualité représentant la qualité de revêtement de chaque composant.

3. Procédé de fonctionnement selon la revendication 1 ou la revendication 2, **caractérisé par** les étapes consistant à :
a) représenter graphiquement les composants sous la forme d'une représentation graphique de composant (16) sur un écran (15), la représentation graphique de composant (16) étant de préférence bidimensionnelle ou tridimensionnelle sur l'écran (15), et
b) marquer graphiquement le défaut de revêtement (19) sur la représentation graphique de composant (16) sur l'écran (15) conformément à la position du défaut de revêtement (19) sur la surface du composant.

4. Procédé de fonctionnement selon l'une quelconque des revendications précédentes, **caractérisé en ce que** les valeurs de procédé sont des valeurs de consigne et/ou des valeurs réelles des grandeurs de fonctionnement des appareils de l'installation de revêtement.

5. Procédé de fonctionnement selon la revendication 4, **caractérisé en ce que** les anomalies des valeurs de procédé pertinentes pour la qualité déterminées sont stockées dans une base de données avec les valeurs de qualité associées.

6. Procédé de fonctionnement selon l'une quelconque des revendications précédentes, **caractérisé par les** étapes d'entraînement de l'algorithme d'apprentissage automatique dans le mode d'entraînement consistant à :
a) déterminer les valeurs de procédé lors d'un fonctionnement de revêtement,
b) déterminer les valeurs de qualité associées lors du fonctionnement de revêtement,
c) stocker les valeurs de procédé déterminées et les valeurs de qualité déterminées dans la base de données,
d) entraîner l'algorithme d'apprentissage automatique sur la base des valeurs de procédé et des valeurs de qualité stockées dans la base de données.

7. Procédé de fonctionnement selon l'une quelconque des revendications précédentes,
**caractérisé par** les étapes consistant à :
a) déterminer une proposition d'optimisation (20) visant à optimiser les valeurs de procédé afin d'éviter le défaut de revêtement,
b) mettre en oeuvre automatiquement la proposition d'optimisation (20) ou
c) afficher la proposition d'optimisation (20).

8. Procédé de fonctionnement selon l'une quelconque des revendications précédentes, **caractérisé en ce que** les valeurs de procédé comprennent au moins l'une des grandeurs de fonctionnement suivantes :
a) grandeurs d'entraînement d'un entraînement de robot pour l'entraînement d'un robot de revêtement, en particulier valeur de consigne et/ou valeur réelle de position, angle, vitesse de rotation et/ou couple,
b) données de trajectoire d'un mouvement de robot, en particulier valeurs de consigne et/ou valeurs réelles de position de trajectoire et/ou de vitesse de trajectoire de l'applicateur dans l'espace le long d'une trajectoire de robot,
c) grandeurs de pompe d'une pompe d'agent de revêtement, en particulier valeurs de consigne et/ou valeurs réelles de débit de l'agent de revêtement, quantité refoulée de l'agent de revêtement, vitesse de rotation de la pompe, couple d'un entraînement de pompe,
d) grandeurs de fonctionnement d'un piston doseur d'une pompe doseuse, en particulier valeurs de consigne et/ou valeurs réelles de position du piston doseur, pression à l'entrée ou à la sortie de la pompe doseuse, débit à travers la pompe doseuse, couple d'un entraînement de pompe,
e) valeurs mesurées de pression d'un capteur de pression, en particulier pression de l'agent de revêtement avant une pompe d'agent de revêtement, pression de l'agent de revêtement après la pompe d'agent de revêtement, agent de revêtement après un piston doseur,
f) grandeurs de vanne d'une vanne, en particulier valeurs de consigne et/ou valeurs réelles d'une vanne d'agent de revêtement pour commander le flux de l'agent de revêtement, en particulier pour une vanne de commande du flux de peinture, solvant, eau, mastic d'étanchéité, matériaux isolants ou adhésifs,
g) grandeurs de fonctionnement d'un régulateur de pression d'air, en particulier valeurs de consigne et/ou valeurs réelles de pression, débit de fluides, en particulier d'air de guidage, air de pulvérisation, air de jupe ou air de maintien libre,
h) grandeurs de fonctionnement d'un régulateur de vitesse de rotation, en particulier valeurs de consigne et/ou valeurs réelles de vitesse de rotation, quantité d'air moteur dans le cas d'un pulvérisateur rotatif,
i) grandeurs de fonctionnement d'un régulateur de pression de peinture, en particulier valeurs de consigne et/ou valeurs réelles de pression de peinture et/ou de débit,
j) grandeurs de fonctionnement d'une charge électrostatique de l'agent de revêtement, en particulier valeurs de consigne et/ou valeurs réelles de tension et/ou de courant de la charge électrostatique de l'agent de revêtement,
k) grandeurs de fonctionnement d'un conditionnement climatique d'une cabine de revêtement, en particulier valeurs de consigne et/ou valeurs réelles de température de l'air, humidité de l'air et/ou vitesse de chute d'air dans la cabine de revêtement,
l) grandeurs d'usure, en particulier état de comptage d'un compteur d'usure ou heures de fonctionnement de préférence mémorisées sur un composant de la machine, en particulier dans une étiquette RFID,
m) valeurs réelles de capteurs de proximité, en particulier de capteurs de proximité capacitifs ou inductifs,
n) type et propriétés de participants de bus de terrain, état de connexion ou compteur d'erreurs de systèmes de bus de terrain,
o) valeurs réelles de capteurs de température, en particulier sur des entraînements, sur l'applicateur ou sur l'alimentation en matériau,
p) messages de perturbation des appareils impliqués dans le procédé de revêtement, en particulier de robots d'application, robots de manutention, APl/commande de cellule, appareils de nettoyage, technique de convoyage, conditionnement de cabine et/ou prétraitement,
q) numéros d'identification de pièces pour identifier les composants à revêtir,
r) propriétés de l'agent de revêtement, en particulier de la peinture, numéro de peinture, code couleur, type d'adhésif, viscosité, température de stockage, température d'application, lot,
s) horodatages des instants de saisie des grandeurs de fonctionnement.

9. Procédé de fonctionnement selon l'une quelconque des revendications précédentes, **caractérisé en ce que**
a) les composants sont chacun revêtus selon des trajectoires de revêtement adjacentes s'étendant parallèlement, et
b) les valeurs de procédé concernent à chaque fois la trajectoire de revêtement en cours de revêtement ainsi que les trajectoires de revêtement voisines.

10. Procédé de fonctionnement selon l'une quelconque des revendications précédentes, **caractérisé en ce que** les valeurs de qualité comprennent au moins l'une des grandeurs suivantes :
a) nombre de défauts de revêtement (19) sur le composant concerné,
b) position des défauts de revêtement (19) dans l'espace, par rapport au composant ou par rapport à la surface partielle revêtue,
c) type des défauts de revêtement (19).

11. Procédé de fonctionnement selon l'une quelconque des revendications précédentes, **caractérisé en ce que**
a) les composants à revêtir sont des composants de carrosserie de véhicule automobile, et/ou
b) l'agent de revêtement est une peinture, un adhésif, un produit d'étanchéité ou un matériau isolant, et/ou
c) l'applicateur est une tête d'impression ou un pulvérisateur, en particulier un pulvérisateur rotatif.

12. Installation de revêtement pour revêtir des composants avec un agent de revêtement, comprenant
a) au moins un applicateur pour appliquer l'agent de revêtement, notamment sous la forme d'un pulvérisateur rotatif,
b) au moins un robot de revêtement (1-4) pour déplacer l'applicateur, et
c) un système de commande (5-15) pour commander le robot de revêtement et l'applicateur,
**caractérisée en ce que**
d) le système de commande (5-14) est configuré pour exécuter le procédé de fonctionnement selon l'une quelconque des revendications précédentes.

13. Installation de revêtement selon la revendication 12, **caractérisée en ce que** le système de commande comprend au moins l'une des composantes de système suivantes :
a) au moins une commande de robot (5-8) pour piloter le robot de revêtement (1-4), la commande de robot (5-8) ou un dispositif d'acquisition supplémentaire fournissant au moins une partie des valeurs de procédé, et/ou
b) au moins une autre commande (9) en plus de la commande de robot, notamment sous la forme d'une commande de cellule (9) qui commande une cellule robot, cette autre commande (9) fournissant au moins une partie des valeurs de procédé,
c) un calculateur de base de données (12) avec une base de données pour stocker les valeurs de procédé et les valeurs de qualité associées,
d) un calculateur de valeurs de qualité (11) pour la saisie manuelle ou automatique des valeurs de qualité,
e) un calculateur de liaison (10)
e1) qui reçoit les valeurs de procédé de la commande de robot (5-8) et/ou de l'autre commande (9) et les transmet au calculateur de base de données (12), et/ou
e2) qui reçoit les valeurs de qualité du calculateur de valeurs de qualité (11) et les transmet au calculateur de base de données (12),
f) un calculateur d'IA (13)
f1) qui reçoit les valeurs de procédé et les valeurs de qualité associées du calculateur de base de données (12) et, au moyen de l'algorithme d'apprentissage automatique, détermine les anomalies des valeurs de procédé pertinentes pour la qualité et la position associée sur le composant, et
f2) qui transmet les anomalies pertinentes pour la qualité déterminées au calculateur de base de données (12) en vue de leur stockage dans la base de données,
g) un calculateur d'affichage (14) pour la représentation graphique du défaut de revêtement (19) sur la représentation graphique de composant (16) conformément à la position du défaut de revêtement (19) sur la surface du composant.

14. Installation de revêtement selon la revendication 13, **caractérisée en ce que**
a) les composantes du système (5-15) du système de commande (5-15) sont conçues en tant que composantes matérielles séparées, ou
b) les composantes du système (5-15) du système de commande (5-15) forment chacune des modules matériels ou des modules logiciels dans un calculateur de commande unitaire,
c) au moins deux, au moins trois, au moins quatre, au moins cinq ou la totalité des composantes de système (5-15) suivantes sont intégrées dans un calculateur unitaire :
c1) le calculateur de liaison (10),
c2) le calculateur de base de données (12),
c3) le calculateur d'IA (13),
c4) le calculateur de commande,
c5) le calculateur d'affichage (14),
c6) le calculateur de valeurs de qualité (11).
